# FASCICULE DE BREVET EUROPEEN

(11) **EP 2 914 373 B1**
(45) Date de publication et mention de la délivrance du brevet: **21.06.2017**
(21) Numéro de dépôt: 13795552.2
(22) Date de dépôt: 28.10.2013
(51) Int. Cl.: B01F 7/08, B01F 15/00

(54) **DISPOSITIF DE MALAXAGE MUNI D'UN DISPOSITIF DE MAINTIEN D'ARBRES**
KNETVORRICHTUNG MIT EINER WELLENHALTEVORRICHTUNG
KNEADING DEVICE FITTED WITH A SHAFT RETENTION DEVICE

(30) Priorité: 30.10.2012 FR 1202924
(43) Date de publication de la demande: 09.09.2015
(73) Titulaire: Airbus Safran Launchers SAS, 92130 Issy-les-Moulineaux (FR); Centre National d'Etudes Spatiales (CNES), 75001 Paris (FR)
(72) Inventeur: NORMAND, Frédéric, 33180 Saint Medard en Jalles (FR)
(74) Mandataire: Joanny, Damien Henri Xavier
(86) Numéro de dépôt international: PCT/FR2013/052573
(87) Numéro de publication internationale: WO 2014/068234

(56) Documents cités:
- EP-A1- 0 464 816
- US-A- 209 195
- US-A- 3 068 051
- US-A- 3 447 582
- US-A- 3 553 777

## Description

### DOMAINE DE L'INVENTION

Le présent exposé concerne un dispositif de malaxage d'une pâte permettant de malaxer et d'extruder une pâte de manière fiable et stabilisée tout en offrant un entretien facilité.

Un tel dispositif peut notamment être utilisé pour assurer l'extrusion de matières dangereuses, pyrotechniques en particulier, de manière sécurisée. En particulier, il permet un entretien facilité et sécurisé du dispositif entre les phases de production.

### ETAT DE LA TECHNIQUE ANTERIEURE

Dans de nombreux domaines industriels (plasturgie, agro-alimentaire, papeterie etc.), les procédés d'extrusion utilisent désormais communément des extrudeuses de type bivis.

Des exemples de bivis sont décrits dans les documents US 3 447 582, US 3 553 777 et EP 0 464 816.

Ces extrudeuses bivis comprennent deux vis engrenantes tournant dans le même sens dans une cavité fixe appelée fourreau. Elles permettent de mélanger différents ingrédients, malaxer la pâte ainsi obtenue et la pousser vers une sortie où une filière peut être disposée pour mettre en forme la pâte ainsi extrudée.

Dans de telles extrudeuses bivis, chaque vis est maintenue et entraînée à une de ses extrémités tandis que sa seconde extrémité est libre : la pâte progresse ainsi vers l'extrémité libre de chacune des vis dans le prolongement desquelles est prévue la sortie. Dans cette configuration, les vis n'étant pas fixées à leur fourreau, il est possible lors de l'entretien ou du nettoyage de désaccoupler le fourreau de la machine entraînant les vis et de l'extraire complètement, coaxialement aux vis, pour révéler ces dernières et permettre une intervention aisée d'un technicien chargé du nettoyage et de l'entretien des vis.

Toutefois, dans de nombreuses applications, les vis peuvent être assez longues : n'étant tenue que par une extrémité, elles peuvent alors présenter une certaine instabilité au niveau de leurs extrémités libres sous l'effet de la gravité, de l'entraînement en rotation, ou des efforts de malaxages et de transport de la pâte.

Pour éviter une telle instabilité qui peut devenir fortement problématiques voire dangereuse dans le cadre de certaines applications industrielles telles que la production de propergols ou d'explosif et l'extrusion de matières dangereuses en général, de nouvelles extrudeuses bivis ont été imaginées dans lesquelles chaque vis est maintenue à ses deux extrémités.

Toutefois, dans cette nouvelle configuration, une extrémité des vis est fixée au fourreau ce qui empêche sa séparation du reste du dispositif pour révéler les vis et permettre l'intervention d'un technicien. Au lieu de cela, les solutions connues consistent à construire le fourreau sous la forme de deux demi-coques articulées par des charnières : lors de l'entretien ou nettoyage, la demi-coque supérieure peut ainsi s'ouvrir par le côté, à l'aide de charnières latérales à la manière d'un sarcophage, ou par une extrémité, à l'aide de charnières distales à la manière d'une mâchoire, pour donner accès à l'intérieur du fourreau.

Malheureusement, une telle ouverture incomplète présente de nombreux inconvénients. Tout d'abord, naturellement, seule la moitié supérieure des vis est révélée : le nettoyage de la partie inférieure des vis s'en retrouve complexifié puisque celle-ci est toujours logée dans la demi-coque inférieure du fourreau et donc difficile accessible. En outre, lorsque le fourreau est ouvert, la demi-coque supérieure repose en porte-à-faux sur les charnières du fourreau, ce qui entraîne instabilité et risque de détérioration du matériel et de blessure du technicien.

On comprend ainsi qu'il existe un réel besoin pour un dispositif de malaxage d'une pâte permettant de malaxer et d'extruder une pâte de manière fiable et stabilisée tout en offrant un entretien facile et sécurisé.

### PRESENTATION DE L'INVENTION

Le présent exposé concerne un dispositif de malaxage d'une pâte comprenant un fourreau oblong, deux arbres, disposés parallèlement au sein du fourreau, maintenus et entraînés à leurs premières extrémités, définissant l'amont, par un dispositif d'entraînement, et deux vis formée chacune par des filetages portés par les arbres, chaque vis comportant au moins une section de transport portant un filetage principal pour faire progresser la pâte le long des deux vis, et un orifice de sortie pratiqué dans la paroi du fourreau pour évacuer la pâte malaxée. Il comprend en outre un dispositif de maintien configuré pour maintenir chaque arbre à sa seconde extrémité, définissant l'aval, et permettre sa libre rotation, ce dispositif de maintien comprenant, pour chaque arbre, une première partie solidaire dudit arbre et une deuxième partie solidaire d'une partie extrémale de capot du fourreau, cette partie extrémale de capot étant démontable et lesdites première et deuxième parties étant configurées pour s'engager et de se désengager librement.

Dans cet exposé, les premières extrémités du fourreau, des arbres et des vis sont situées du côté du dispositif d'entraînement et définissent l'amont du dispositif de malaxage ; les secondes extrémités du fourreau, des arbres et des vis sont situées du côté du dispositif de maintien, c'est-à-dire à l'opposé du dispositif d'entrainement, et définissent l'aval du dispositif de malaxage. La pâte progresse depuis l'amont vers l'aval du dispositif de malaxage.

Le principe de fonctionnement de ce dispositif de malaxage est analogue aux extrudeuses bivis connues précitées. Toutefois, grâce au dispositif de maintien qui permet de maintenir la seconde extrémité de chaque arbre tout en permettant sa libre rotation, la position et le mouvement de chaque vis sont mieux contrôlés sur toute la longueur de vis. En conséquence, les mouvements parasites et les vibrations induites sont réduits. L'extrusion se déroule de manière plus stable et régulière, et la qualité de malaxage n'est pas entamée. Les frottements sont également réduits : on évite ainsi l'échauffement de la pâte en cours d'extrusion. En particulier, cette absence d'échauffement et d'à-coups limite le risque d'incident pyrotechnique lors du malaxage de matières explosives.

En outre, dans la mesure où les parties du dispositif de maintien respectivement solidaires des vis et de la partie extrémale de capot se désengagent librement l'une de l'autre, il suffit de démonter la partie extrémale de capot pour désacoupler le fourreau de la machine. Dès lors, il devient possible d'extraire complètement ce dernier coaxialement aux vis, par leurs extrémités ainsi libérées, pour révéler complètement les vis et donc permettre une intervention libre sur la totalité de la surface des vis avec n'importe quel angle d'approche. Le nettoyage des vis, notamment, en est grandement facilité. En outre, hormis la partie extrémale de capot qui a été démontée, cette configuration permet au fourreau de garder sa cohésion lors de l'entretien et au technicien de travailler dans des conditions plus sécurisées : les inconvénients précités entraînés par l'ouverture du fourreau en deux demi-coques sont évités.

De plus, le système de maintien des vis permet ainsi un déplacement longitudinal de l'ensemble vis par rapport à l'ensemble fourreau, ce qui permet de pallier les effets d'allongement pendant les périodes de travail dus aux variations de température notamment.

Dans certains modes de réalisation, la première partie du dispositif de maintien est un manchon cylindrique fixé à la seconde extrémité dudit arbre, prolongeant ce dernier au moins en partie, et formant ainsi une cavité coaxiale audit arbre, la deuxième partie du dispositif de maintien est une fusée, solidaire de la partie extrémale de capot du fourreau, également appelée lanterne, qui pénètre dans ladite cavité coaxialement audit arbre. Le dispositif de maintien comprend en outre un système de roulement logé dans ladite cavité permettant le roulement du manchon cylindrique sur la fusée. Cette configuration permet de maintenir chaque arbre dans son prolongement sans utiliser de palier circonférentiel qui serait encombrant et mal adapté à cette application pratique. En outre, le caractère démontable de la partie de capot d'extrémité et la disposition du dispositif de maintien prévue ainsi dans le prolongement des arbres offrent une facilité de mise en place, un démontage et une intervention rapide. Ce dispositif de maintien en tant que tel est également un objet du présent exposé. Il n'a pas vocation à se limiter à l'application décrite ici mais pourrait être utilisé dans toutes les machines possédant un arbre que l'on souhaite maintenir à son extrémité.

Dans certains modes de réalisation, chaque vis est également formée par des filetages portés par au moins un tronçon du manchon cylindrique. De cette manière, la longueur utile de chaque vis est allongée et peut correspondre à la longueur totale de l'ensemble composé par l'arbre et le manchon. Ainsi, la longueur du manchon n'est pas perdue.

Dans certains modes de réalisation, chaque manchon cylindrique est fixé sur son arbre par l'intermédiaire d'un écrou fixé à ladite seconde extrémité dudit arbre. Ceci facilite le montage et évite une désolidarisation intempestive du manchon due, par exemple, aux efforts d'entrainement en rotation ou de malaxage de la pâte.

Dans certains modes de réalisation, la partie extrémale de capot du fourreau comporte des percements coaxiaux auxdits arbres dans lesquels s'engagent les fusées pour pénétrer dans leurs cavités respectives, et chaque fusée comprend un talon qui est fixé sur la surface extérieure de la partie extrémale de capot du fourreau. Le montage/démontage est ainsi facilité et peut s'effectuer depuis l'extrémité du dispositif de malaxage ce qui offre une grande facilité d'accès et d'intervention.

Dans d'autres modes de réalisation, la partie extrémale de capot du fourreau comporte des découpes coaxiales auxdits arbres dans lesquelles s'engagent et se bloquent les fusées pour pénétrer dans leurs cavités respectives. On évite ainsi de percer la partie extrémale de capot dans le prolongement des arbres et on assure un verrouillage en position des fusée par simple recouvrement par la partie extrémale de capot et montage de cette dernière sur la partie principale du fourreau.

Dans certains modes de réalisation, les fusées font partie intégrante de la partie extrémale de capot du fourreau et sont agencée coaxialement auxdits arbres de manière à pénétrer dans leurs cavités respectives. On évite ainsi tout percement ou découpe de la partie extrémale de capot et toute opération de fixation des fusées, ces dernières étant naturellement solidaires de la partie extrémale de capot.

Dans certains modes de réalisation, ladite partie extrémale de capot du fourreau, également appelée lanterne, est une pièce monobloc. Ceci facilite encore le démontage et l'intervention sur le dispositif de maintien en cas de problème.

Dans certains modes de réalisation, le dispositif de maintien comprend en outre, pour chaque arbre, un flasque disposé à l'entrée de la cavité entre le manchon cylindrique et la fusée pour assurer l'étanchéité de la cavité et protéger le système de roulement.

Dans certains modes de réalisation, ledit orifice de sortie est pratiqué dans la paroi latérale du fourreau pour évacuer la pâte malaxée, et le dispositif de malaxage comporte en outre un agencement de blocage pour bloquer la progression de la pâte et l'amener à sortir par l'orifice latéral de sortie.

Dans la mesure où la région de la seconde extrémité des vis est occupée par le dispositif de maintien, un orifice latéral de sortie est prévu dans la paroi latérale du fourreau pour évacuer la pâte malaxée. De cette manière, la pâte sort latéralement avant l'extrémité de la vis de manière à ne pas enrayer ou endommager le dispositif de maintien.

Grâce à l'agencement de blocage, la progression de la pâte est entravée de telle sorte que celle-ci s'échappe préférentiellement par l'orifice latéral de sortie. De cette manière, la pâte est empêchée de continuer son chemin vers les secondes extrémités des vis et donc vers le dispositif de maintien qu'elle pourrait endommager. Un tel agencement de blocage peut prendre la forme d'une section contrarotative dont le filetage est de sens opposé à celui du filetage principal ou bien d'un joint empêchant la progression de la pâte au-delà dudit joint. Il peut également s'agir d'une section d'arrêt formant une butée d'arrêt pour la pâte au sein du fourreau ou d'une section d'interruption lisse et dénuée de filetages.

Dans certaines modes de réalisation, la partie extrémale de capot du fourreau comprend au moins une ouverture latérale. Cette ouverture latérale est notamment utile pour évacuer un éventuel excédent de pâte et permet ainsi de limiter l'accumulation de pâte pouvant potentiellement provoquer un incident pyrotechnique. Elle permet également de limiter l'occurrence de bourrages pouvant potentiellement endommager le dispositif de malaxage et notamment le dispositif de maintien.

Dans certains modes de réalisation, ladite ouverture latérale est disposée au niveau de la surface inférieure de la partie extrémale de capot du fourreau. De cette manière, l'excédent de pâte tombe par gravité hors du fourreau et est ainsi évacué.

Dans certains modes de réalisation, un récipient est disposé sous cette ouverture latérale pour recueillir l'excédent de pâte ainsi évacué. Ce récipient peut être fixé de manière amovible à la partie extrémale de capot du fourreau.

Dans certains modes de réalisation, un système vidéo, une caméra notamment, est disposé sous la partie extrémale de capot du fourreau et dirigée vers ladite ouverture latérale afin d'observer si un excédent de pâte est présent au niveau du dispositif de maintien. Ce système vidéo peut être fixé à la partie extrémale de capot de fourreau.

Dans certains modes de réalisation, une ouverture latérale est disposée au niveau de la surface supérieure de la partie extrémale de capot du fourreau. De cette manière, il est possible de contrôler visuellement si un excédent de pâte est présent au niveau du dispositif de maintien.

Les caractéristiques et avantages précités, ainsi que d'autres, apparaîtront à la lecture de la description détaillée qui suit, d'exemples de réalisation du dispositif proposé. Cette description détaillée fait référence aux dessins annexés.

### BREVE DESCRIPTION DES DESSINS

Les dessins annexés sont schématiques et visent avant tout à illustrer les principes de l'invention.

Sur ces dessins, d'une figure (FIG) à l'autre, des éléments (ou parties d'élément) identiques sont repérés par les mêmes signes de référence.
La FIG 1 est une vue d'ensemble en perspective d'un premier exemple de réalisation du dispositif.
La FIG 2 est une représentation schématique en coupe de l'exemple de dispositif de la FIG 1.
La FIG 3 est une vue de détail, en perspective et partiellement en coupe, de la zone du dispositif de maintien de l'exemple de dispositif de la FIG 1.
La FIG 4 est une représentation schématique en coupe de l'exemple de dispositif de la FIG 1 en cours de démontage.
La FIG 5 est une vue de détail, en perspective et partiellement en coupe, de la zone du dispositif de maintien d'un deuxième exemple de réalisation du dispositif.
La FIG 6 est une représentation schématique de la zone du dispositif de maintien d'un troisième exemple de réalisation du dispositif.

### DESCRIPTION DETAILLEE D'EXEMPLES DE REALISATION

Afin de rendre plus concrète l'invention, des exemples de dispositifs sont décrits en détail ci-après, en référence aux dessins annexés. Il est rappelé que l'invention ne se limite pas à ces exemples.

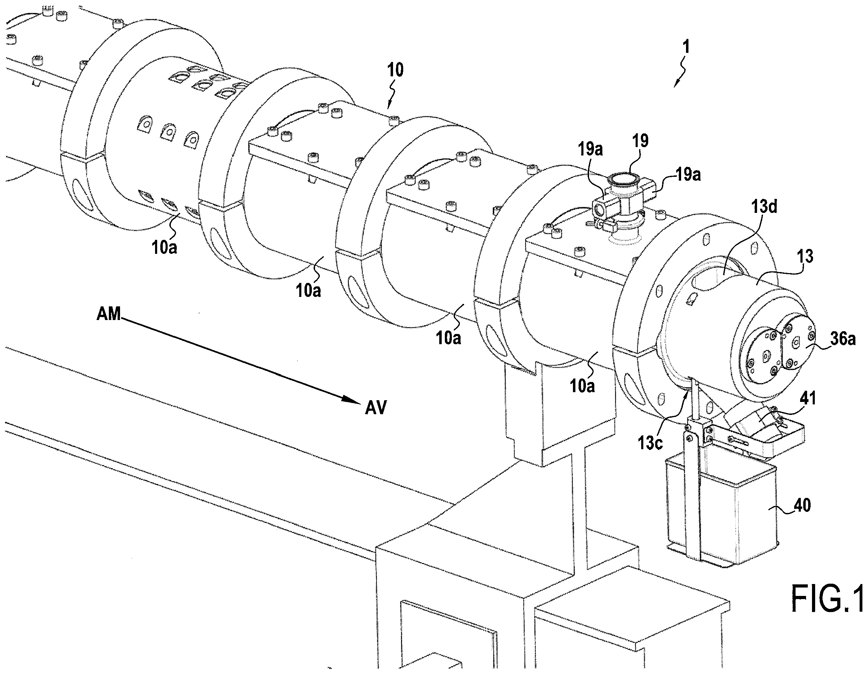

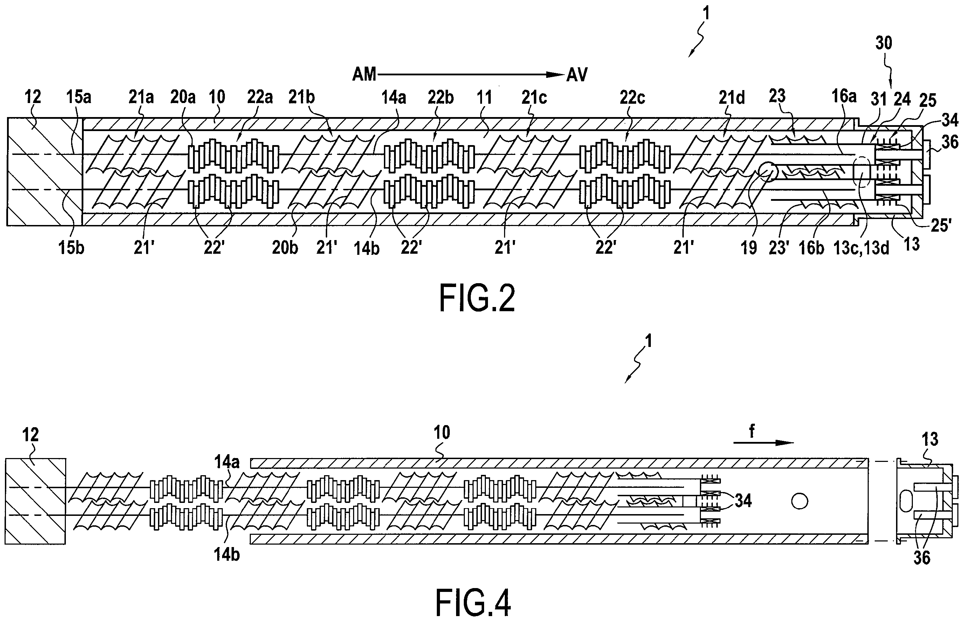

La FIG 1 représente un premier exemple de réalisation d'un dispositif de malaxage 1 selon l'invention. Ce même dispositif de malaxage 1 est représenté schématiquement en coupe sur la FIG 2.

Ce dispositif de malaxage 1 comprend un fourreau 10 oblong et sensiblement cylindrique. Il peut être composé de plusieurs tronçons 10a connectés les uns avec les autres. Ce fourreau 10 définit intérieurement un évidement 11 dont un plan de coupe transversal révèle une forme sensiblement en 8, les première et deuxième boucles du 8 correspondant respectivement à des première 11a et deuxième 11b chambres de l'évidement 11 qui communiquent l'une avec l'autre. Le fourreau 10 est fermé à sa première extrémité, définissant l'amont AM, par un bloc d'entraînement 12 contenant un dispositif d'entrainement, et à sa deuxième extrémité, définissant l'aval AV, par une partie extrémale de capot 13 également appelée lanterne.

Chaque chambre 11a, 11b accueille une vis 20a, 20b portant différents types de filetages. Dans cet exemple de réalisation, d'amont AM en aval AV, chaque vis 20a, 20b comprend une première section de transport 21a, une première section de malaxage 22a, une deuxième section de transport 21b, une deuxième section de malaxage 22b, une troisième section de transport 21c, une troisième section de malaxage 22c, une quatrième section de transport 21d, une section contrarotative 23, une section d'interruption 24 et enfin une section de barrage 25.

Les sections de transport 21 sont munies de filetages hélicoïdaux 21' dits principaux ayant un pas principal et un sens principal, en l'occurrence antihoraire. Les sections de malaxage 22 sont munies d'une série de disques excentriques 22' : ces disques 22' sont excentrés par rapport à l'axe de la vis 20a, 20b mais également entre eux, ou tout au moins entre disques excentriques 22' voisins. La section contrarotative 23 (il peut toutefois en avoir plusieurs) est munie d'un filetage hélicoïdal 23' dit contrarotatif ayant une sens opposé au sens principal, en l'occurrence le filetage contrarotatif 23' est horaire ; son pas est quelconque et peut notamment être égal au pas principal ou lui être inférieur par exemple. La section d'interruption 24 (il peut toutefois en avoir plusieurs) est quant à elle lisse et sans filetage : son diamètre est de préférence égal au diamètre de pied de la vis (c'est-à-dire au creux de son filetage). Enfin, la section de barrage 25 (il peut toutefois en avoir plusieurs) est munie d'une série de bagues annulaires 25'.

Les vis 20a et 20b sont disposées en parallèle de manière à ce chaque section 21 à 25 de la première vis 20a soit en vis-à-vis de la section correspondante 21 à 25 de la deuxième vis 20b. En outre, certaines sections des vis 20a et 20b, et notamment les sections de transport 21, les sections de malaxages 22 et la section contrarotative, sont engrenantes l'une dans l'autre. Pour cette raison, les filetages des sections de transport 21 et contrarotatives 23 présentent, en un point donné, un certain déphasage entre les deux vis 20a et 20b. En revanche, ce déphasage est nul pour les sections de malaxage 22 afin que les saillies des sections de malaxage 22 de la première vis 20a engrènent dans les creux des sections de malaxage 22 de la deuxième vis 20b.

La géométrie de chaque chambre 11a, 11b est sensiblement cylindrique à base circulaire, ce cylindre étant tronqué au niveau du passage de communication entre les deux chambres 11a et 11b. En outre, son diamètre correspond, à un petit jeu près, au diamètre de tête (c'est-à-dire au sommet des filetages) des différents filetages des vis 20a, 20b de telle sorte que les vis 20a, 20b affleurent la paroi interne de leur chambre 11a, 11b respective au moins au niveau de leurs sections filetées 21 et 23.

Les chambres 11a et 11b débouchent vers l'extérieur par l'intermédiaire d'un orifice latéral de sortie 19 en surface du fourreau 10. Celui-ci prend la forme d'un conduit faisant saillie au sommet du fourreau 10. Il présente des canaux latéraux 19a pour mettre en place d'éventuels capteurs. Cet orifice latéral de sortie 19 est disposé sensiblement au niveau de la transition entre la dernière section de transport 21d et la section contrarotative 23.

Les chambres 11a et 11b débouchent également vers l'extérieur par l'intermédiaire de deux ouvertures latérales 13c et 13d pratiquées dans la lanterne 13 du fourreau. La première ouverture latérale 13c est disposée dans la surface inférieure de la lanterne 13 ; la deuxième ouverture latérale 13d est disposée dans la surface supérieure de la lanterne 13, en vis-à-vis de la première ouverture latérale 13c. Ces ouvertures latérales se situent sensiblement au niveau de la section d'interruption 24 des vis 20a et 20b. Dans certains exemples de réalisation, le fourreau 10 peut être démuni d'un orifice latéral de sortie tel que décrit plus haut : dans un tel cas, la pâte malaxée peut s'échapper par une des ouvertures latérale 13c, 13d.

Chaque vis 20a et 20b est portée, dans une partie amont, par un arbre cannelé 14a et 14b et, dans une partie aval, par un manchon 31 qui prolonge ledit arbre 14a, 14b et qui sera décrit en détail ci-après. La première extrémité 15a, 15b de chaque arbre 14a, 14b est entraînée en rotation de manière synchronisée, dans le même sens et à la même vitesse, par le dispositif d'entrainement 12 afin que les vis 20a et 20b engrènent correctement et ne s'enrayent pas. Dans cet exemple, les arbres 14a et 14b sont entraînés dans le sens horaire.

La deuxième extrémité 16a, 16b de chaque arbre 14a, 14b est quant à elle maintenue par un dispositif de maintien 30 : ce dernier permet la libre rotation des arbres 14a et 14b lorsqu'ils sont entraînés par le dispositif d'entrainement 12.

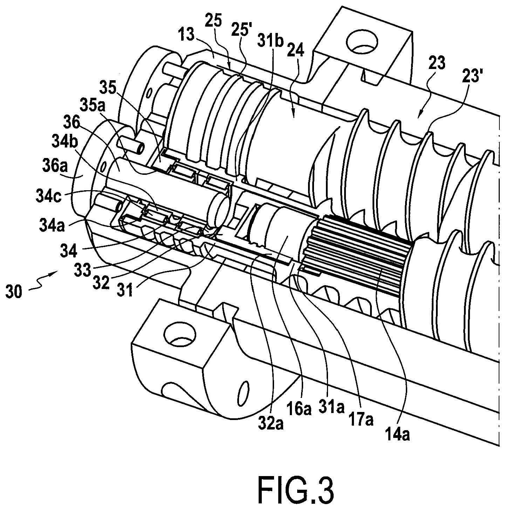

Ce dispositif de maintien 30 est illustré plus en détail sur la FIG 3. Il est identique pour chacun des deux arbres 14a et 14b : seul le dispositif de maintien du premier arbre 14a sera ainsi décrit.

Il comprend un manchon 31 emmanché sur la deuxième extrémité 16a et 16b des deux arbres cannelés 14a et 14b. Le manchon 31 comporte une couronne interne annulaire 31a qui s'applique contre un épaulement 17a de la deuxième extrémité 16a de l'arbre 14a de telle sorte que le manchon 31 est calé dans sa position de fonctionnement. Un écrou 32 est vissé à la deuxième extrémité 16a, filetée, de l'arbre 14a de telle manière que le talon 32a de l'écrou 32 appuie sur la couronne 31a du manchon 31 est la bloque contre l'épaulement 17a de l'arbre 14a : le manchon 31 est ainsi solidaire de l'arbre cannelé 14a et tourne donc avec lui lorsqu'il est entraîné en rotation par le dispositif d'entraînement 12.

Emmanché de cette manière, le manchon 31 prolonge l'arbre 14a et définit ainsi une cavité 33 dans l'axe de l'arbre 14a. Cette cavité 33 accueille un système de roulement 34, à rouleaux par exemple, calé contre un épaulement interne 31b du manchon 31. Ce système de roulement 34 comprend un anneau extérieur 34a, solidaire du manchon 31, et un anneau intérieur 34b roulant librement concentriquement à l'anneau extérieur 34a par l'intermédiaire de rouleaux 34c. Un flasque 35 est disposé à l'entrée de la cavité 33 et bloque l'anneau extérieur 34a du système de roulement 34 contre l'épaulement 31b du manchon 31. Ce flasque 35 protège la cavité 33 en ne laissant qu'une ouverture 35a qui est comblée par une fusée 36.

La partie extrémale de capot 13 du fourreau 10 ou lanterne est fixée à la partie principale du fourreau 10 par des moyens de solidarisation permettant un montage et un démontage aisé de la lanterne 13. Elle est munie de deux percements 13a, 13b, chacun d'entre eux étant coaxial à un des arbres 14a et 14b. La fusée 36 pénètre dans la cavité 33 à travers le percement 13a de la lanterne 13, l'ouverture 35a du flasque 35 et l'anneau intérieur 34b du système de roulement 34. Le talon 36a de la fusée 36 est fixé contre la surface extérieure de la lanterne 13 tandis que la fusée 36 est solidarisée avec l'anneau intérieur 34b du système de roulement. Ainsi, la fusée 36 est fixe par rapport à la lanterne 13 et au fourreau 10 et le manchon 31 peut librement tourner autour de cette fusée 36 de sorte que la seconde extrémité 16a de l'arbre 14a est maintenue par ce dispositif de maintien 30.

En outre, dans cet exemple de réalisation, le manchon 31 porte la section contrarotative 23, la section d'interruption 24 et la section de barrage 25.

Le fonctionnement du dispositif 1 va maintenant être expliqué en détail en référence aux FIG 1 à 3.

Les composants de la pâte que l'on cherche à extruder sont introduits au sein du fourreau 10 du dispositif 1 par l'intermédiaire d'une ouverture d'admission (non représentée). Ils peuvent avoir fait l'objet d'une étape de dosage et d'un pré-mélange. Ils peuvent également avoir été additionnés avec un liant pour obtenir une pâte apte à être malaxée par le dispositif 1.

Durant toute l'opération, les arbres 14a et 14b sont entraînés en rotation, de manière synchronisée, selon une vitesse constante. Le sens de rotation est ici le sens horaire. La pâte est alors entraînée d'amont en aval depuis l'ouverture d'admission vers l'orifice latéral de sortie 19.

Les sections de transports 21 entraînent, selon le mécanisme de la vis d'Archimède, la pâte vers l'aval. En outre, la pâte est cisaillée, et ainsi déjà en partie malaxée, dans les zones d'engrenage des filetages 21' des sections de transports 21.

Les sections de malaxages 22 reçoivent la pâte poussée par la section de transport 21 située en amont : la pâte est malaxée entre les différents disques excentriques 22' des deux vis 20a et 20b et entre ces disques et les parois des chambres 11a et 11b. La pâte progresse dans les sections de malaxages 22 sous la pression de la pâte amont poussée par les sections de transport 21.

A l'issue de la dernière section de transport 21d, la pâte rencontre la section contrarotative 23 dont les filetages contrarotatifs 23' tendent à la repousser vers l'amont. Sous l'effet de ces deux forces opposées, la pâte est poussée vers l'orifice latéral de sortie 19 localisé dans cette zone. La pâte est alors extrudée et récupérée par des moyens de convoyages ad hoc. Une filière peut être mise en place au niveau de l'orifice latéral de sortie 19 pour mettre en forme la pâte extrudée, par exemple sous la forme d'un profilé ayant une géométrie donnée.

Dans l'hypothèse où la pression de la pâte amont serait trop forte et/ou que l'orifice latéral de sortie 19 serait bouché ou entravé, de la pâte peut parvenir à progresser dans la section contrarotative malgré l'inversion du filetage 23'. Dans un tel cas, la pâte finit par déboucher dans la section d'interruption 24 au niveau de laquelle elle s'échappe par la première ouverture latérale 13c : l'excédent de pâte tombe ainsi par gravité dans un conteneur 40 fixé sous la lanterne 13, à la verticale de la première ouverture latérale 13c. Une caméra 41 est également fixée sous la lanterne 13 pour observer à travers la première ouverture latérale 13c et détecter la présence éventuelle d'un tel excédent de pâte. La deuxième ouverture latéral 13d permet quant à elle un contrôle visuel par un opérateur.

L'absence de filetage et le caractère lisse de la section d'interruption 24 permet de réduire l'adhérence de la pâte sur les vis 20a et 20b et ainsi de favoriser sa chute hors du fourreau 10. Toutefois, si de la pâte restait collée aux vis 20a et 20b, les bagues 25' de la section de barrage 25 empêcheraient la pâte de progresser plus avant et d'enrayer le dispositif de maintien 30 ou d'engendre une accumulation de pâte susceptible de générer un incident pyrotechnique. Enfin, les flasques 35 forment un dernier rempart pour protéger le système de roulement 34 et éviter que de la pâte n'y pénètre et ne l'enraye.

Entre les phases de production, le fourreau 10 peut être entièrement retiré pour permettre le nettoyage du dispositif de malaxage : cette opération est représentée sur la FIG 4. Dans l'exemple de réalisation représenté, il convient de démonter la lanterne 13 afin de la désolidariser du reste de fourreau 10. Grâce au dispositif de maintien 30 comprenant un manchon 31 roulant librement sur une fusée 36 solidaire de la lanterne 13, le démontage et le retrait de la lanterne 13 n'est pas entravée par le dispositif de maintien 30 : les fusées 36 sont en effet simplement et naturellement désengagées de leur manchon 31 respectif au cours du retrait de la lanterne 13. Dès lors, le fourreau 10 est totalement désolidarisé des vis 21 et peut donc être détaché du dispositif d'entraînement 12 et coulissé (selon la direction de la flèche f) tout le long et coaxialement aux vis 21 pour finalement être totalement retiré par l'extrémité aval AV du dispositif.

Ceci dit, grâce à cette architecture du dispositif du maintien 30 dans laquelle l'ensemble vis 20a, 20b se désengage librement de l'ensemble fourreau 10, il serait possible dans d'autres exemple de réalisation de désolidariser cet ensemble vis 20a, 20b de l'ensemble fourreau 10 et d'extraire ce dernier pour permettre l'entretien et le nettoyage sans l'étape préalable de démontage de la lanterne 13.

Une fois le fourreau 10 retiré, les vis 21 sont entièrement révélées ce qui permet une intervention aisée pour un technicien chargé du nettoyage ou de la maintenance du dispositif.

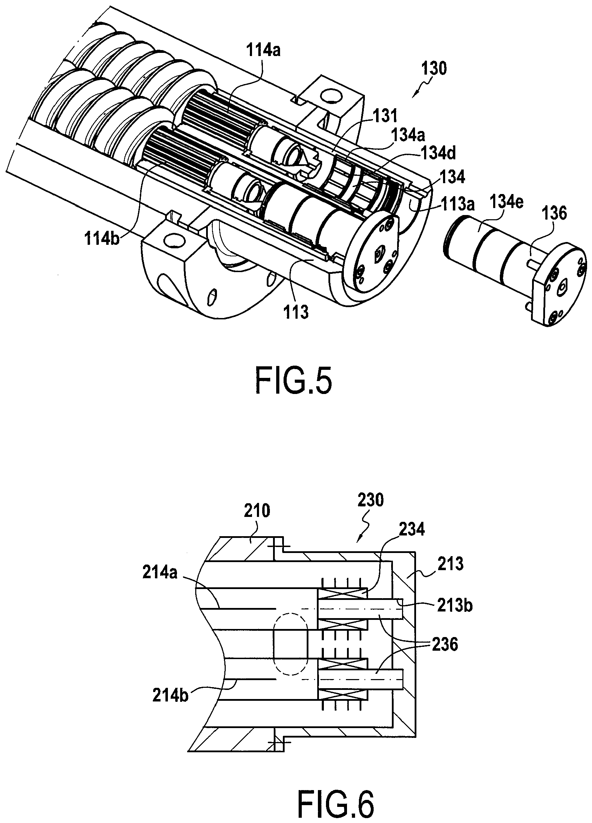

La FIG 5 représente un deuxième exemple de réalisation d'un dispositif 100 selon l'invention. Seules les différences avec le premier mode de réalisation seront présentées. En outre, les éléments (ou parties d'élément) de cet exemple de réalisation ayant une fonction analogue à ceux déjà présentés sont repérés sur les figures par des références numériques incrémentées de 100.

Dans cet exemple de réalisation, le système de roulement 134 est différent. Il comprend toujours un anneau extérieur 134a solidaire du manchon 131 mais ne comprend plus d'anneau intérieur : les rouleaux sont ici remplacés par des aiguilles 134d qui roulent sur une bande de roulement 134e de la fusée 136. En outre la fusée 136 possède un diamètre plus important, ce qui impose des percements 113a et 113b plus grands de la lanterne 113.

La FIG 6 représente un troisième exemple de réalisation d'un dispositif 200 selon l'invention. Seules les différences avec le premier mode de réalisation seront présentées. En outre, les éléments (ou parties d'élément) de cet exemple de réalisation ayant une fonction analogue à ceux déjà présentés sont repérés sur les figures par des références numériques incrémentées de 200.

Dans cet exemple de réalisation, la lanterne 213 ne possède pas de percements traversant destinés aux fusées 236 mais simplement des découpes 213b pratiquée dans la surface intérieure de la lanterne 213, chacune d'entre elles étant coaxiale à un des arbres 214a et 214b. Ces découpes 213b présentent en outre la même forme et les même dimensions qu'une extrémité des fusées 236 de telle sorte qu'il possible d'y fixer en force lesdites fusées 236 afin de les solidariser avec la lanterne 213. Les fusées 236 sont alors dans la position adéquate pour pénétrer dans le système de roulement 234 du dispositif de maintien 230. Il est également possible de souder les fusées directement sur la surface intérieure de la lanterne 213 ou encore de former les fusées et la lanterne en une seule pièce.

Les modes ou exemples de réalisation décrits dans le présent exposé sont donnés à titre illustratif et non limitatif, une personne du métier pouvant facilement, au vu de cet exposé, modifier ces modes ou exemples de réalisation, ou en envisager d'autres, tout en restant dans la portée de l'invention.

De plus, les différentes caractéristiques de ces modes ou exemples de réalisation peuvent être utilisées seules ou être combinées entre elles. Lorsqu'elles sont combinées, ces caractéristiques peuvent l'être comme décrit ci-dessus ou différemment, l'invention ne se limitant pas aux combinaisons spécifiques décrites dans le présent exposé. En particulier, sauf précision contraire, une caractéristique décrite en relation avec un mode ou exemple de réalisation peut être appliquée de manière analogue à un autre mode ou exemple de réalisation.

## Revendications

1. Dispositif de malaxage d'une pâte comprenant
un fourreau oblong (10),
deux arbres (14a, 14b), disposés parallèlement au sein du fourreau (10), maintenus et entraînés à leurs premières extrémités (15a, 15b), définissant l'amont (AM), par un dispositif d'entraînement (12),
deux vis (20a, 20b) formée chacune par des filetages portés par les arbres (14a, 14b), chaque vis (20a, 20b) comportant au moins une section de transport (21a-21d) portant un filetage principal (21') pour faire progresser la pâte le long des deux vis (20a, 20b),
un orifice de sortie (19) pratiqué dans la paroi du fourreau (10) pour évacuer la pâte malaxée, et
un dispositif de maintien (30) configuré pour maintenir chaque arbre (14a, 14b) à sa seconde extrémité (16a, 16b), définissant l'aval (AV), et permettre sa libre rotation, ce dispositif de maintien (30) comprenant, pour chaque arbre (14a, 14b), une première partie (31) solidaire dudit arbre (14a, 14b) et une deuxième partie (36) solidaire d'une partie extrémale de capot (13) du fourreau (10), cette partie extrémale de capot (13) étant démontable et lesdites première (31) et deuxième (36) parties étant configurées pour s'engager et de se désengager librement,
**caractérisé en ce que**, pour chaque arbre (14a, 14b),
la première partie du dispositif de maintien (30) est un manchon cylindrique (31) fixé à la seconde extrémité (16a, 16b) dudit arbre (14a, 14b), prolongeant ce dernier au moins en partie, et formant ainsi une cavité coaxiale (33) audit arbre (14a, 14b),
**en ce que** la deuxième partie du dispositif de maintien (30) est une fusée (36), solidaire de la partie extrémale de capot (13) du fourreau (10), qui pénètre dans ladite cavité (33) coaxialement audit arbre (14a, 14b), et
**en ce que** le dispositif de maintien (30) comprend en outre un système de roulement (34) logé dans ladite cavité (33) permettant le roulement du manchon cylindrique (31) sur la fusée (36).

2. Dispositif de malaxage selon la revendication 1, **caractérisé en ce que** chaque vis (20a, 20b) est également formée par des filetages portés par au moins un tronçon du manchon cylindrique (31).

3. Dispositif de malaxage selon la revendication 1 ou 2, **caractérisé en ce que** chaque manchon cylindrique (31) est fixé sur son arbre (14a, 14b) par l'intermédiaire d'un écrou (32) fixé à ladite seconde extrémité (15a, 15b) dudit arbre (14a, 14b).

4. Dispositif de malaxage selon l'une quelconque des revendications 1 à 3, **caractérisé en ce que** la partie extrémale de capot (13) du fourreau (10) comporte des percements (13a, 13b) coaxiaux auxdits arbres (14a, 14b) dans lesquels s'engagent les fusées (36) pour pénétrer dans leurs cavités respectives (33), et **en ce que** chaque fusée (36) comprend un talon (36a) qui est fixé sur la surface extérieure de la partie extrémale de capot (13) du fourreau (10).

5. Dispositif de malaxage selon l'une quelconque des revendications 1 à 3, **caractérisé en ce que** la partie extrémale de capot (213) du fourreau comporte des découpes (213b) coaxiales auxdits arbres (214a, 214b) dans lesquelles s'engagent et se bloquent les fusées (236) pour pénétrer dans leurs cavités respectives.

6. Dispositif de malaxage selon l'une quelconque des revendications 1 à 5, **caractérisé en ce que** ladite partie extrémale de capot (13) du fourreau (10) est une pièce monobloc.

7. Dispositif de malaxage selon l'une quelconque des revendications 1 à 6, **caractérisé en ce que** le dispositif de maintien (30) comprend en outre, pour chaque arbre (14a, 14b), un flasque (35) disposé à l'entrée de la cavité (33) entre le manchon cylindrique (31) et la fusée (36) pour assurer l'étanchéité de la cavité (33) et protéger le système de roulement (34).

8. Dispositif de malaxage selon l'une quelconque des revendications 1 à 7, **caractérisé en ce que** ledit orifice de sortie (19) est pratiqué dans la paroi latérale du fourreau (10) pour évacuer la pâte malaxée, et
**en ce que** le dispositif de malaxage comporte en outre un agencement de blocage (23) pour bloquer la progression de la pâte et l'amener à sortir par l'orifice latéral de sortie (19).

9. Dispositif de malaxage selon l'une quelconque des revendications 1 à 8, **caractérisé en ce que** la partie extrémale de capot (13) du fourreau (10) comprend au moins une ouverture latérale (13c, 13d).

## Patentansprüche

1. Vorrichtung zum Mischen einer Paste, umfassend
eine längliche Hülle (10),
zwei Wellen (14a, 14b), die parallel in der Hülle (10) angeordnet sind und von einer Antriebsvorrichtung (12) an ihren ersten Enden (15a, 15b), die den stromaufwärtigen Bereich (AM) definieren, gehalten und angetrieben werden,
zwei Schnecken (20a, 20b), die jeweils von Gewinden gebildet sind, die von den Wellen (14a, 14b) getragen werden, wobei jede Schnecke (20a, 20b) mindestens einen Förderabschnitt (21 a-21 d) umfasst, der ein Hauptgewinde (21') trägt, um die Paste entlang der beiden Schnecken (20a, 20b) vorwärts zu befördern,
eine Ausgangsöffnung (19), die in der Wand der Hülle (10) vorgesehen ist, um die gemischte Paste auszuleiten, und
eine Haltevorrichtung (30), die dazu vorgesehen ist, jede Welle (14a, 14b) an ihrem zweiten Ende (16a, 16b), die den stromabwärtigen Bereich (AV) definiert, zu halten und ihre freie Drehung zu ermöglichen, wobei diese Haltevorrichtung (30) für jede Welle (14a, 14b) einen ersten Teil (31), der mit der Welle (14a, 14b) verbunden ist, und einen zweiten Teil (36), der mit einem Kappenendteil (13) der Hülle (10) verbunden ist, umfasst, wobei dieser Kappenendteil (13) demontierbar ist, und die ersten (31) und zweiten (36) Teile dazu vorgesehen sind, sich frei einzuklinken und auszuklinken,
**dadurch gekennzeichnet, dass** für jede Welle (14a, 14b)
der erste Teil der Haltevorrichtung (30) eine zylindrische Muffe (31) ist, die am zweiten Ende (16a, 16b) der Welle (14a, 14b) befestigt ist, wobei sie diese letztgenannte teilweise verlängert und auf diese Weise einen koaxialen Hohlraum (33) zur Welle (14a, 14b) bildet,
dass der zweite Teil der Haltevorrichtung (30) eine Spindel (36) ist, die mit dem Kappenendteil (13) der Hülle (10) verbunden ist und in den Hohlraum (33) koaxial zur Welle (14a, 14b) eindringt, und
dass die Haltevorrichtung (30) ferner ein Rollsystem (34) umfasst, das in dem Hohlraum (33) angeordnet ist und das Rollen der zylindrischen Muffe (31) auf der Spindel (36) ermöglicht.

2. Mischvorrichtung gemäß Anspruch 1, **dadurch gekennzeichnet, dass** jede Schnecke (20a, 20b) auch von Gewinden gebildet ist, die von mindestens einem Abschnitt der zylindrischen Muffe (31) getragen werden.

3. Mischvorrichtung gemäß Anspruch 1 oder 2, **dadurch gekennzeichnet, dass** jede zylindrische Muffe (31) auf ihrer Welle (14a, 14b) mit Hilfe einer Mutter (32) befestigt ist, die am zweiten Ende (15a, 15b) der Welle (14a, 14b) befestigt ist.

4. Mischvorrichtung gemäß einem der Ansprüche 1 bis 3, **dadurch gekennzeichnet, dass** der Kappenendteil (13) der Hülle (10) Bohrungen (13a, 13b) koaxial zu den Wellen (14a, 14b) umfasst, in die die Spindeln (36) eingreifen, um in ihre jeweiligen Hohlräume (33) einzudringen, und dass jede Spindel (36) eine Ferse (36a) umfasst, die auf der Außenfläche des Kappenendteils (13) der Hülle (10) befestigt ist.

5. Mischvorrichtung gemäß einem der Ansprüche 1 bis 3, **dadurch gekennzeichnet, dass** der Kappenendteil (213) der Hülle Ausschnitte (213b) koaxial zu den Wellen (214a, 214b) umfasst, in die die Spindeln (236) eingreifen und in denen sie sich feststellen, um in ihre jeweiligen Hohlräume einzudringen.

6. Mischvorrichtung gemäß einem der Ansprüche 1 bis 5, **dadurch gekennzeichnet, dass** der Kappenendteil (13) der Hülle (10) ein einstückiges Teil ist.

7. Mischvorrichtung gemäß einem der Ansprüche 1 bis 6, **dadurch gekennzeichnet, dass** die Haltevorrichtung (30) ferner für jede Welle (14a, 14b) einen Flansch (35) umfasst, der am Eingang des Hohlraums (33) zwischen der zylindrischen Muffe (31) und der Spindel (36) angeordnet ist, um die Abdichtung des Hohlraums (33) zu gewährleisten und das Rollsystem (34) zu schützen.

8. Mischvorrichtung gemäß einem der Ansprüche 1 bis 7, **dadurch gekennzeichnet, dass** die Ausgangsöffnung (19) in der Seitenwand der Hülle (10) vorgesehen ist, um die gemischte Paste auszuleiten, und
dass die Mischvorrichtung ferner eine Blockieranordnung (23) umfasst, um das Fortschreiten der Paste zu blockieren und sie dazu zu bewegen, durch die seitliche Austrittsöffnung (19) auszutreten.

9. Mischvorrichtung gemäß einem der Ansprüche 1 bis 8, **dadurch gekennzeichnet, dass** der Kappenendteil (13) der Hülle (10) mindestens eine seitliche Öffnung (13c, 13d) umfasst.

## Claims

1. A device for kneading a paste, comprising:
· an oblong barrel (10),
· two shafts (14a, 14b) arranged parallel within the barrel (10), being held and driven at their first ends (15a, 15b), defining an upstream end (AM), by means of a drive device (12),
· two screws (20a, 20b) each formed by threads carried by the shafts (14a, 14b), each screw (20a, 20b) having at least one transport section (21a-21a) carrying a main thread (21') to cause the paste to advance along the two screws (20a, 20b),
· an outlet orifice (19) formed in the wall of the barrel (10) to discharge the kneaded paste, and
· a holder device (30) configured to hold each shaft (14a, 14b) at its second end (16a, 16b), defining a downstream (AV) end, and enabling the shaft to rotate freely, the holder device (30) comprising, for each shaft (14a, 14b), a first portion (31) secured to said shaft (14a, 14b) and a second portion (36) secured to a cap end portion (13) of the barrel (10), the cap end portion (13) being removable and said first and second portions (31, 36) being configured to engage and disengage freely,
**characterized in that**, for each shaft (14a, 14b),
· the first portion of the holder device (30) is a cylindrical sleeve (31) fastened to the second end (16a, 16b) of said shaft (14a, 14b), extending the latter at least in part, and thus forming a cavity (33) on the axis of said shaft (14a, 14b),
· **in that** the second portion of the holder device (30) is a spindle (36) secured to the cap end portion (13) of the barrel (10) and penetrating into said cavity (33) on the axis of said shaft (14a, 14b), and
· **in that** the holder device (30) further includes a roller bearing system (34) housed in said cavity (33) enabling the cylindrical sleeve (31) to rotate on the spindle (36).

2. A kneading device according to claim 1, **characterized in that** each screw (20a, 20b) is also formed by threads carried by at least one segment of the cylindrical sleeve (31).

3. A kneading device according to claim 1 or 2, **characterized in that** each cylindrical sleeve (31) is fastened on its shaft (14a, 14b) by means of a nut (32) fastened to said second end (15a, 15b) of said shaft (14a, 14b).

4. A kneading device according to any one of claims 1 to 3, **characterized in that** the cap end portion (13) of the barrel (10) includes holes (13a, 13b) on the axes of said shafts (14a, 14b) in which the spindles (36) engage in order to penetrate into their respective cavities (33), and **in that** each spindle (36) has a heel (36a) that is fastened to the outside surface of the cap end portion (13) of the barrel (10).

5. A kneading device according to any one of claims 1 to 3, **characterized in that** the cap end portion (213) of the barrel has cutouts (213b) on the axes of said shafts (214a, 214b) in which the spindles (236) engage and are blocked in order to penetrate into their respective cavities.

6. A kneading device according to any one of claims 1 to 5, **characterized in that** said cap end portion (13) of the barrel (10) is a single-piece part.

7. A kneading device according to any one of claims 1 to 6, **characterized in that** the holder device (30) further comprises, for each shaft (14a, 14b), a shield (35) arranged at the inlet of the cavity (33) between the cylindrical sleeve (31) and the spindle (36) in order to seal the cavity (33) and protect the bearing system (34).

8. A kneading device according to any one of claims 1 to 7, **characterized in that** said outlet orifice (19) is formed in the lateral wall of the barrel (10) in order to discharge the kneaded paste, and
· **in that** the kneading device further includes a blocking arrangement (23) for blocking advance of the paste and causing it to leave via the lateral outlet orifice (19).

9. A kneading device according to any one of claims 1 to 8, **characterized in that** the cap end portion (13) of the barrel (10) includes at least one lateral opening (13c, 13d).
